# EUROPÄISCHE PATENTSCHRIFT

(11) **EP 3 266 732 B1**
(45) Veröffentlichungstag und Bekanntmachung des Hinweises auf die Patenterteilung: **14.11.2018**
(21) Anmeldenummer: 16191514.5
(22) Anmeldetag: 29.09.2016
(51) Int. Cl.: B65G 69/28

(54) **VORSCHUB-LADEBRÜCKE SOWIE VERFAHREN ZUM ANSCHLUSS DES LADERAUMS EINES TRANSPORTFAHRZEUGES AN EINER VORSCHUB-LADEBRÜCKE**
FEED LOADING BRIDGE AND METHOD FOR CONNECTING THE LOAD AREA OF A TRANSPORT VEHICLE TO A FEED LOADING BRIDGE
NIVELEUR DE QUAI À LÈVRE TÉLESCOPIQUE AINSI QUE PROCÉDÉ DE RACCORDEMENT D'UNE SOUTE D'UN VÉHICULE DE TRANSPORT À UN NIVEAU DE QUAI À LÈVRE TÉLESCOPIQUE

(30) Priorität: 16.06.2016 DE 102016111038
(43) Veröffentlichungstag der Anmeldung: 10.01.2018
(73) Patentinhaber: Novoferm GmbH, 46419 Isselburg (DE)
(72) Erfinder:
(74) Vertreter: Lorenz, Bernd Ingo Thaddeus

(56) Entgegenhaltungen:
- GB-A- 2 094 751
- US-A- 3 138 812
- US-A1- 2015 360 889

## Beschreibung

Die Erfindung betrifft eine Vorschub-Ladebrücke, welche eine an einem vorderen Rand höhenverstellbare und ausfahrbare Trittfläche aufweist, wobei Antriebe für die Höhenverstellung und das Ausfahren der Trittfläche an einer Steuerung angeschlossen sind und wobei diese Steuerung eine Eingabeschnittstelle aufweist, mit der die Trittfläche von einem Benutzer durch eine Höhenverstellung sowie ein Ausfahren positionierbar ist.

Das Dokument GB 2 094 751 offenbart eine Vorschub-Ladebrücke nach dem Oberbegriff des Anspruchs 1.

Gegenstand der Erfindung ist des Weiteren auch ein Verfahren zum Anschluss des Laderaums eines Transportfahrzeuges an einer Vorschub-Ladebrücke.

Ladebrücken, die auch als Überladebrücken bezeichnet werden, dienen als Rampe, um eine Be- und Entladung von Lastkraftwagen oder anderen Nutzfahrzeugen zu ermöglichen. Ladebrücken bilden dabei an einer Laderampe den möglichst stufenlosen Übergang zwischen dem Laderaum des Kraftfahrzeuges sowie einem Gebäude in Form einer Lager- und Verladehalle.

Um zu Fuß, mit einem Hubwagen oder auch mit einem Gabelstapler sicher von der Lager- und Verladehalle in den Laderaum zu gelangen, stellt die Ladebrücke einen stufenlosen Übergang bereit. Um dabei einen Anschluss an unterschiedlich hohe Laderäume von Fahrzeugen zu ermöglichen, ist die Ladebrücke in der Regel höhenverstellbar.

Darüber hinaus muss auch nach dem Positionierens des Fahrzeuges vor der Ladebrücke in der Regel ein Abstand überbrückt werden. So ist üblicherweise vorgesehen, dass das Transportfahrzeug beispielsweise ein Lastkraftwagen oder der Anhänger eines Lastkraftwagens, bis zu einem Anfahrpuffer an die mit der Ladebrücke ausgerüstete Rampe herangefahren wird. Um dann oberhalb der Anfahrpuffer ein Anschlag zu vermeiden, ist dort zwischen der Ladebrücke ausgehend von einer Ruhestellung ein Abstand vorgesehen, der nachfolgend überbrückt werden muss, wozu die Ladebrücke entweder ausfahrbar ist oder einen herunterklappbaren Abschnitt aufweist.

Die vorliegende Erfindung bezieht sich konkret auf eine Vorschub-Ladebrücke, welche eine an einem vorderen Rand höhenverstellbare und ausfahrbare Trittfläche aufweist.

Gattungsgemäße Ladebrücken werden von der Docking Solution und Service GmbH (www.mydocking.com) beispielsweise unter den Produktbezeichnungen L530i und L550i vertrieben.

Die Anmeldung bezieht sich insbesondere in Übereinstimmung mit diesem Stand der Technik auf Vorschub-Ladebrücken, welche hydraulisch angetrieben sind.

Bei dem Anschluss des Laderaums eines Transportfahrzeuges an einer Vorschub-Ladebrücke kann zunächst der Laderaum geöffnet werden, bevor der Laderaum in Form eines LKW-Aufbaus, -Anhängers oder Containers rückwärts an die Vorschub-Ladebrücke herangefahren wird, wozu das Fahrzeug langsam bis an einen Anfahrpuffer heranrollt. Bei einem bereits geöffneten Laderaum kann dann nach dem Erreichen der Endposition die Trittfläche der Vorschub-Ladebrücke mit ihrem vorderen Rand innerhalb des geöffneten Laderaums angeordnet werden, um nachfolgend ein zügiges und sicheres Entladen zu ermöglichen.

Der Laderaum des Fahrzeuges ist üblicherweise durch aufschwenkbare Türen oder auch ein Rolltor verschlossen, wobei solche Türen oder auch ein Rolltor alleine aus praktischen Gründen in der Regel per Hand zu bedienen sind. Ein Öffnen des Laderaums vor dem Andockvorgang an der Vorschub-Ladebrücke ist zwar im Hinblick auf die nachfolgenden Positionierung der Vorschub-Ladebrücke von Vorteil, jedoch besteht häufig auch das Bedürfnis, den Laderaum erst nach dem Andock-Vorgang zu öffnen.

Zunächst ist zu beachten, dass Türen oder auch ein Rolltor des verschlossenen Laderaums von einem Benutzer von der Trittfläche leichter zugänglich sind als vom Boden. Dabei ist auch zu beachten, dass durch ein nachträgliches Öffnen des Laderaums auch eine Zeitersparnis erreicht werden kann. Ein Fahrer des Transportfahrzeuges kann unmittelbar und ohne Pause an die Vorschub-Ladebrücke heranfahren, wobei dann das Öffnen des Laderaums von dem ohnehin mit der Verladung beschäftigten Personal durchgeführt wird. In vielen Fällen ist es auch von Vorteil, wenn der Laderaum möglichst lange geschlossen bleibt. Dies trifft beispielsweise bei gekühlten Produkten zu, kann jedoch auch von Vorteil sein, wenn nach dem Andock-Vorgang keine sofortige Entladung erfolgen soll.

Wenn also gemäß der beschriebenen Variante der Laderaum von der Trittfläche der Vorschub-Ladebrücke geöffnet werden soll, besteht unmittelbar nach dem Andocken des Laderaums bei der Ruhestellung der Vorschub-Ladebrücke ein Abstand zwischen dem vorderen Rand der Trittfläche sowie den Laderaum, so dass eine Unfallgefahr gerade bei einer unachtsamen Handhabung oder auch bei Zeitdruck nicht ausgeschlossen werden kann. Um einen sicheren Umgang mit der Vorschub-Ladebrücke zu ermöglichen, kann ein Benutzer vor einem Öffnen des Laderaums aus der Ruhestellung heraus zunächst die Trittfläche soweit an den geschlossenen Laderaum heranfahren, dass der Abstand zwischen dem vorderen Rand der Trittfläche sowie dem Laderaum zumindest teilweise soweit geschlossen wird, dass eine Verletzungsgefahr ausgeschlossen wird.

Dabei besteht jedoch der Nachteil, dass entsprechendes Personal auf die Sicherheitsrisiken hingewiesen werden muss und dennoch eine ordnungsgemäße Handhabung nicht sichergestellt werden kann.

Vor diesem Hintergrund liegt der vorliegenden Erfindung die Aufgabe zugrunde, eine Vorschub-Ladebrücke anzugeben, welche mit einem großen Maß an Sicherheit vielzeitig einsetzbar ist. Des Weiteren soll auch ein Verfahren zum Anschluss des Laderaums eines Transportfahrzeuges an der Vorschub-Ladebrücke und damit also ein Verfahren zum Betrieb der Vorschub-Ladebrücke angegeben werden.

Gegenstand der Erfindung und Lösung der Aufgabe sind eine Vorschub-Ladebrücke gemäß Patentanspruch 1 sowie ein Verfahren gemäß Patenanspruch 8.

Ausgehend von einer gattungsgemäßen Vorschub-Ladebrücke ist erfindungsgemäß vorgesehen, dass die Steuerung eine Zusatzschnittstelle aufweist, deren Betätigung ein Ausfahren der Trittfläche bewirkt und dass ausgehend von einer Ruhestellung der Vorschub-Ladebrücke die Eingabeschnittstelle bis zu einer erstmaligen Betätigung der Zusatzschnittstelle von der Steuerung deaktiviert ist.

Erfindungsgemäß ist ausgehend von einer Ruhestellung, wenn die Vorschub-Ladebrücke also nicht an den Laderaum eines Kraftfahrzeuges angeschlossen ist, die für die eigentliche Positionierung der Trittfläche vorgesehene Eingabeschnittstelle deaktiviert, so dass dann über die eigentliche Eingabeschnittstelle nach dem Heranfahren eines Laderaums eines Fahrzeuges eine Einstellung noch nicht möglich ist. Ein Benutzer ist dazu gezwungen, stets zunächst die Zusatzschnittstelle zu bedienen, wodurch zunächst ein Ausfahren der Trittfläche ausgelöst wird. Beispielsweise kann die Zusatzschnittstelle durch einen einzigen Schalter, insbesondere einen Tastschalter gebildet sein, wobei bei einem Gedrückthalten des Tastschalters die Trittfläche ausgefahren wird.

Ein Benutzer ist also stets dazu angehalten, zunächst die Trittfläche in einem gewissen Maß auszufahren, wodurch ein Abstand zwischen einem vorderen Rand der Trittfläche und dem Laderaum verringert wird. Eine versehentliche Fehlbedienung ist damit ausgeschlossen, auch wenn ein Benutzer in einer einfachen Ausgestaltung der Erfindung die Trittfläche durch eine Betätigung der Zusatzschnittstelle von Hand in einem geeigneten Maße ausfahren muss.

Nach einer erstmaligen Betätigung der Zusatz-Schnittstelle ist auch wieder eine Eingabe über die übliche Eingabeschnittstelle möglich, wenn beispielsweise ein bereits geöffneter Laderaum an der Vorschub-Ladebrücke positioniert wird, muss die Trittfläche nicht vorab betreten werden. Es ist deshalb ausreichend, wenn ein Benutzer die Zusatzschnittstelle lediglich kurz betätigt und sodann die übliche Einstellung mit der Eingabeschnittstelle vornimmt. Weitere Zeitverzögerungen ergeben sich hierdurch nicht.

Durch die Deaktivierung der Eingabeschnittstelle zu Beginn des Betriebs ausgehend von einer Ruhestellung wird jedoch ein stark erhöhtes Maß an Sicherheit erreicht. Ein Benutzer wird stets daran erinnert, zunächst einen Abstand zwischen den vorderen Rand der Trittfläche und dem Laderaum zu schließen oder zumindest zu verringern, wenn der Laderaum noch von Hand geöffnet werden muss, wozu an dem Laderaum beispielsweise ein Rolltor oder Türen vorgesehen sein können.

Wie bereits zuvor beschrieben, bewirkt die Betätigung der Zusatzschnittstelle in der Regel eine manuelle Einstellung, wobei beispielsweise bei dem Drücken eines Tastschalters die Trittfläche weiter ausgefahren wird. Grundsätzlich ist aber auch eine automatische oder halbautomatische Steuerung mit Kontaktsensoren oder anderen Überwachungseinrichtungen möglich.

Die Eingabeschnittstelle selbst ist gemäß dem Stand der Technik ausgeführt und kann beispielsweise drei Schalter, insbesondere Tastschalter aufweisen. Neben Bedienelementen für eine Positionierung der Trittfläche können auch weitere Bedienoptionen wie beispielsweise das Öffnen eines Rolltores oder dergleichen integriert werden.

Die Steuerung kann auch dazu eingerichtet sein, nach der Betätigung der Zusatzschnittstelle ein akustisches und/oder optisches Bestätigungssignal zu erzeugen.

Gemäß einem weiteren Aspekt der vorliegenden Erfindung kann vorgesehen sein, dass die Eingabeschnittstelle und die Zusatzschnittstelle als Schalter, insbesondere als Tastschalter gemeinsam an einem Bedienfeld angeordnet sind und dass das Bedienfeld zumindest eine optische Anzeigeeinrichtung aufweist, welche der Eingabeschnittstelle oder der Zusatzschnittstelle zugeordnet ist. Im Rahmen einer solchen Ausgestaltung ist zumindest eine optische Anzeigeeinrichtung bevorzugt nur der Eingabeschnittstelle oder nur der Zusatzschnittstelle zugeordnet. Beispielsweise ist es möglich, dass ausgehend von der Ruhestellung zunächst nur ein Schalter, insbesondere ein Tastschalter der Zusatzschnittstelle beleuchtet ist, während erst nach einer erstmaligen Betätigung der Zusatzschnittstelle auch die Schalter, insbesondere Tastschalter der Eingabeschnittstelle beleuchtet werden. Die Betriebsbereitschaft kann zusätzlich oder alternativ auch durch Farbwechsel-LEDs oder andere Anzeigeeinrichtungen angezeigt werden. So ist beispielsweise möglich, dass zunächst nur die Zusatzschnittstelle mit einer grünen LED markiert ist, während die Deaktivierung der Eingabeschnittstelle durch rot leuchtende LEDs angezeigt wird, welche jedoch nach einer erstmaligen Betätigung der Zusatzschnittstelle ihre Farbe wechseln.

Die Vorschub-Ladebrücke ist vorzugsweise hydraulisch angetrieben. Gemäß einer üblichen Ausgestaltung ist die Trittfläche an einer dem vorderen Rand gegenüberliegenden Seite um eine Drehachse schwenkbeweglich an einer Tragkonstruktion, insbesondere an einer gebäudefesten Tragkonstruktion angeordnet. Um ein Ausfahren zu ermöglichen, ist die Trittfläche üblicherweise von einem ersten Trittflächenabschnitt und einem zweiten Trittflächenabschnitt gebildet, welche in Ausfahrrichtung gegeneinander beweglich sind. Beispielsweise kann ein Abschnitt der Trittfläche ausgehend von dem vorderen Rand von einem ausfahrbaren Schwert bzw. einer ausfahrbaren Lippe gebildet sein, welche nachfolgend bei der Positionierung an dem Laderaum von oben an die Trittfläche des Laderaums angelegt wird.

Gegenstand der Erfindung ist auch ein Verfahren zum Anschluss des Laderaums eines Transportfahrzeuges an einer Vorschub-Ladebrücke mit den zuvor beschriebenen Merkmalen. Im Rahmen des erfindungsgemäßen Verfahrens wird der durch Türen, ein Rolltor oder dergleichen geschlossene Laderaum des Fahrzeuges vor der sich in einer Ruhestellung befindenden Vorschub-Ladebrücke derart positioniert, dass zwischen dem vorderen Rand und dem geschlossenen Laderaum ein Abstand verbleibt. Üblicherweise wird das Fahrzeug mit seinem den Laderaum bildenden Aufbau oder einem den Laderaum bildenden Anhänger rückwärts bis an Anfahrpuffer herangefahren. In der Ruhestellung ist die Eingabeschnittstelle deaktiviert, wobei lediglich die Zusatzschnittstelle auf Eingaben reagieren kann.

Sodann wird zunächst die Zusatzschnittstelle betätigt, wodurch die Trittfläche in Richtung des geschlossenen Laderaums ausgefahren und damit der Abstand zwischen dem vorderen Rand der Trittfläche und dem Laderaum verringert wird und wodurch die Eingabeschnittstelle aktiviert wird. Sodann wird der Laderaum geöffnet, bevor durch eine Betätigung der nun aktivierten Eingabeschnittstelle die Trittfläche an dem geöffneten Laderaum positioniert wird. Insbesondere kann der vordere Rand der Trittfläche auf bzw. über einen Boden des Laderaums gelegt werden.

Erfindungsgemäß ist die Eingabeschnittstelle ausgehend von der Ruheposition zunächst deaktiviert. Damit ist im Rahmen der Erfindung gemeint, dass in diesem Zustand eine Betätigung der Eingabeschnittstelle nicht zu einer Bewegung der Trittfläche führt. Eine solche Funktionalität kann beispielsweise durch eine geeignete Programmierung der Steuerung erzielt werden. Grundsätzlich ist es auch möglich, einen Teil der Steuerung oder einen Teil der Antriebe zunächst stromlos zu schalten und erst nach einer erstmaligen Betätigung der Zusatzschnittstelle eine Stromversorgung für die Eingabeschnittstelle bereitzustellen, wodurch gegebenenfalls auch eine Energieersparnis möglich ist.

Im Rahmen der Erfindung wird durch die Betätigung der Zusatzschnittstelle die Trittfläche ausgefahren. Dabei kann auch vorgesehen sein, dass für ein Ausfahren der Trittfläche diese zunächst automatisch aus der Ruhestellung leicht angehoben wird, wobei dieses Anheben von einem Benutzer nicht weiter gesteuert werden kann. Im Rahmen der Erfindung wird zunächst eine einfache, automatisierte Bewegung vorgeschaltet, welche den Abstand zwischen dem vorderen Rand der Trittfläche und dem Laderaum verringert, so dass dann ohne eine Verletzungsgefahr ein zunächst geschlossener Laderaum des Fahrzeuges von Hand geöffnet werden kann. Insbesondere kann durch eine Betätigung der Zusatzschnittstelle vermieden werden, dass eine Person sich verletzt, wenn diese von der Trittfläche in die zwischen dem vorderen Rand der Trittfläche und dem Laderaum gebildete Öffnung fällt.

Die Erfindung wird im Folgenden anhand einer lediglich ein Ausführungsbeispiel darstellenden Zeichnung erläutert. Es zeigen:
- Fig. 1: ein Bedienfeld für eine Vorschub-Ladebrücke,
- Fig. 2A bis 2D: ein Verfahren zum Anschluss des Laderaums eines Transportfahrzeuges an einer Vorschub-Ladebrücke.

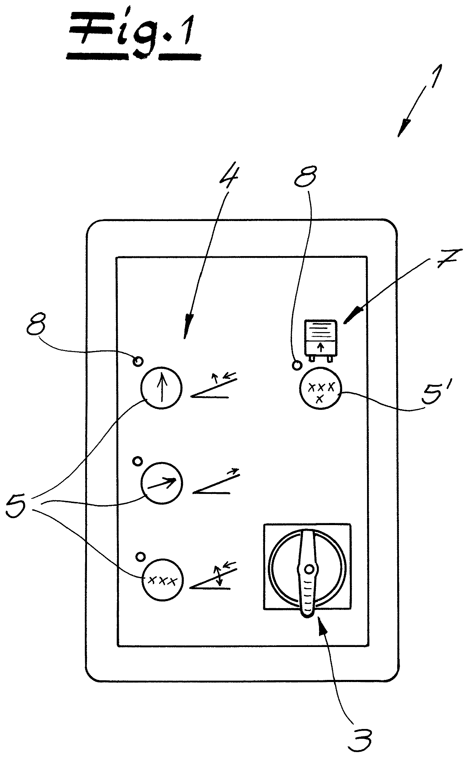

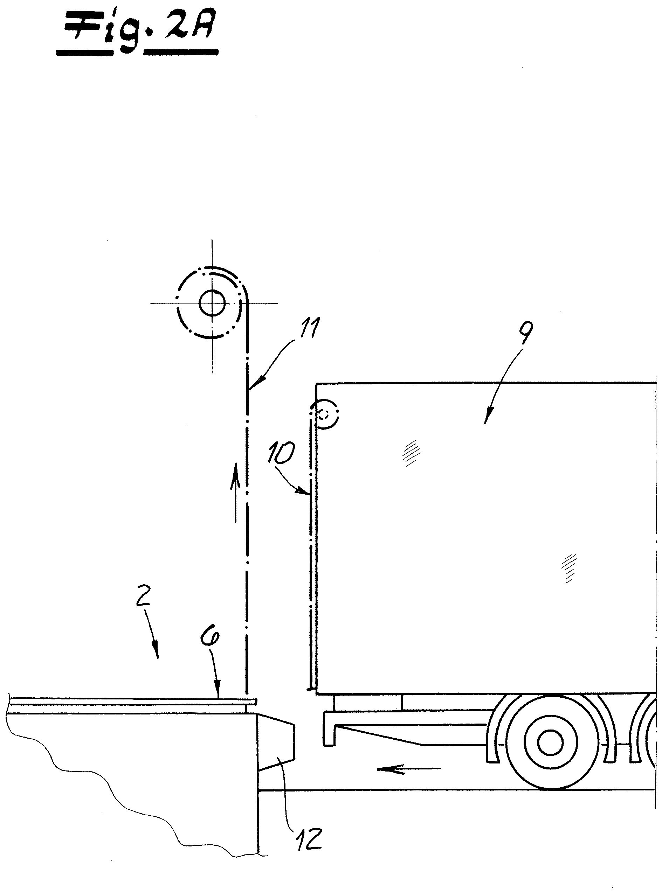

Die Fig. 1 zeigt ein Bedienfeld 1 einer Steuerung einer Vorschub-Ladebrücke 2. Auf dem Bedienfeld ist neben einem Notaus-Schalter 3 eine Eingabeschnittstelle 4 mit drei Tastschaltern 5 in einer üblichen Ausgestaltung angeordnet. Mit den Tastschaltern 5 der Eingabeschnittstelle 4 kann eine in den Fig. 2A bis 2D dargestellte Trittfläche 6 der Vorschub-Ladebrücke 2 positioniert werden, wobei ein erster Tastschalter 5 ein Anheben und Einfahren, ein zweiter Tastschalter 5 ein Ausfahren und ein dritter Tastschalter 5 ein Zurückfahren, das heißt ein Absenken und Einfahren der Trittfläche 6 bewirken.

Es handelt sich dabei um eine mögliche Ausgestaltung einer an sich bekannten Eingabeschnittstelle 4, wobei grundsätzlich auch andere Bewegungskombinationen hinsichtlich des Anhebens und Absenkens sowie des Ein- und Ausfahrens möglich sind.

Zusätzlich zu der an sich bekannten Eingabeschnittstelle 4 ist erfindungsgemäß eine Zusatzschnittstelle 7 in Form eines weiteren Tastschalters 5' vorgesehen. Wie nachfolgend erläutert, dient die Zusatzschnittstellte 7 einer Erhöhung der Sicherheit bei dem Betrieb der Vorschub-Ladebrücke 2, wobei ausgehend von einer Ruhestellung der Vorschub-Ladebrücke 2 zunächst nur eine Bedienung der Zusatzschnittstelle 7 möglich ist und die Tastschalter 5 der Eingabeschnittstelle 4 deaktiviert sind. Ein entsprechender Status kann beispielsweise durch Anzeige-LEDs 8 verdeutlicht werden, welche einen Farbenwechsel ermöglichen. Ausgehend von der Ruheposition kann beispielsweise zumindest nur der Tastschalter 5' der Zusatzschnittstelle 7 mit einer grün leuchtenden Anzeige-LED 8 verknüpft sein, während die übrigen Anzeige-LEDs der Schalter 5 der Eingabeschnittstelle 4 zunächst rot leuchten. Auch andere Arten von Anzeigen sowie ein akustisches und/oder optisches Betätigungssignal können vorgesehen sein.

Erst nach einem erstmaligen Betätigen des Tastschalters 5' der Zusatzschnittstelle 7 wird die Eingabeschnittstelle 4 aktiviert. Zu Beginn einer Benutzung ausgehend von einer Ruhestellung reagieren also die Tastschalter 5 der Eingabeschnittstelle 4 nicht auf einen Druck.

Das mit der erfindungsgemäßen Vorschub-Ladebrücke durchführende Verfahren zum Anschluss eines Laderaums 9 eines Transportfahrzeuges an der Vorschub-Ladebrücke 2 ist in den Fig. 2A bis 2D dargestellt.

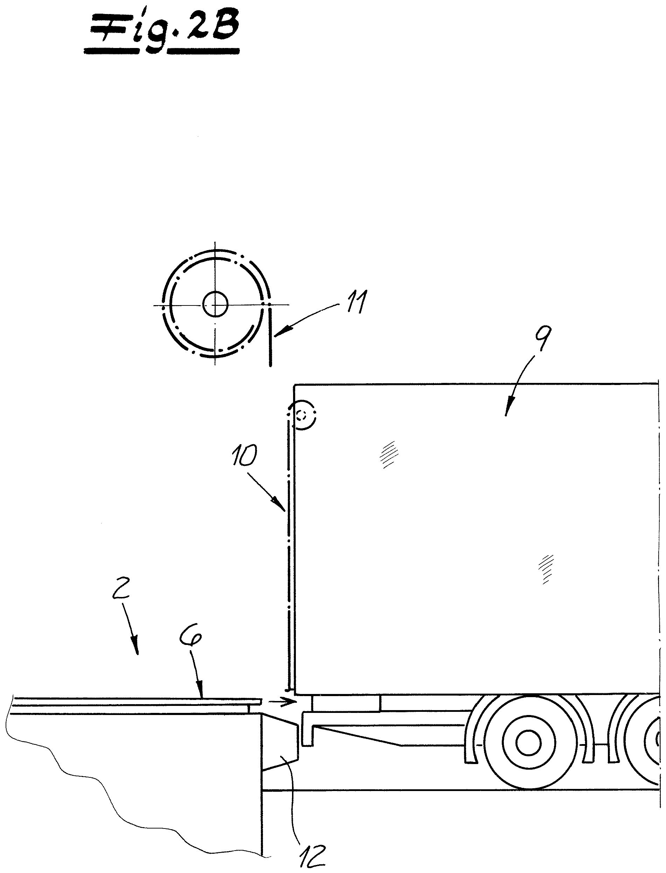

Die Fig. 2A zeigt einen Lastkraftwagen, dessen Laderaum 9 zunächst mit einem Rolltor 10 oder alternativ Türen verschlossen ist. Auch an der Vorschub-Ladebrücke ist ein Tor 11 vorgesehen. Während der zunächst geschlossene Laderaum 9 an die Vorschub-Ladebrücke 2 herangefahren wird, öffnet sich auch das Tor 11 an der Vorschub-Ladebrücke 2. Der Lastkraftwagen wird bei der Positionierung an einen an der Vorschub-Ladebrücke 2 angeordneten Anschlagpuffer 12 herangefahren. Die Fig. 2B zeigt dann die Endposition des Lastkraftwagens an dem Anschlagpuffer 12, wobei zwischen der Trittfläche 6 der Vorschub-Ladebrücke 2 und dem zunächst durch das Rolltor 10 geschlossenen Laderaum 9 ein Abstand verbleibt, in den ein unaufmerksamer Benutzer hereinfallen kann. Insbesondere muss das Rolltor 10 des Laderaums 9 von der Trittfläche 6 der Vorschub-Ladebrücke 2 geöffnet werden, weshalb der zunächst verbleibende Abstand ein erhebliches Verletzungsrisiko erzeugen kann.

Um im Rahmen der Erfindung eine sichere Handhabung zu ermöglichen, muss ein Benutzer an dem in Fig. 1 dargestellten Bedienfeld 1 zunächst den Tastschalter 5' der Zusatzschnittstelle 7 betätigen, wodurch die Trittfläche 6 ausgehend von der Ruheposition angehoben und in Richtung des Laderaums 9 ausgefahren wird. Durch einen Druck des Tastschalters 5' der Zusatzschnittstelle 7 kann ein Benutzer die Trittfläche 6 soweit an den Laderaum 9 heranfahren, dass der zuvor verbleibende Zwischenraum verringert und vorzugsweise geschlossen wird. Da - wie zuvor beschrieben - die Tastschalter 5 der Eingabeschnittstelle 4 zunächst deaktiviert sind und somit eine genaue Positionierung der Trittfläche 6 noch nicht möglich ist, wird ein Benutzer stets an die vorgelagerte Betätigung der Zusatzschnittstelle 7 erinnert, wodurch ein erhöhtes Maß an Sicherheit erreicht werden kann.

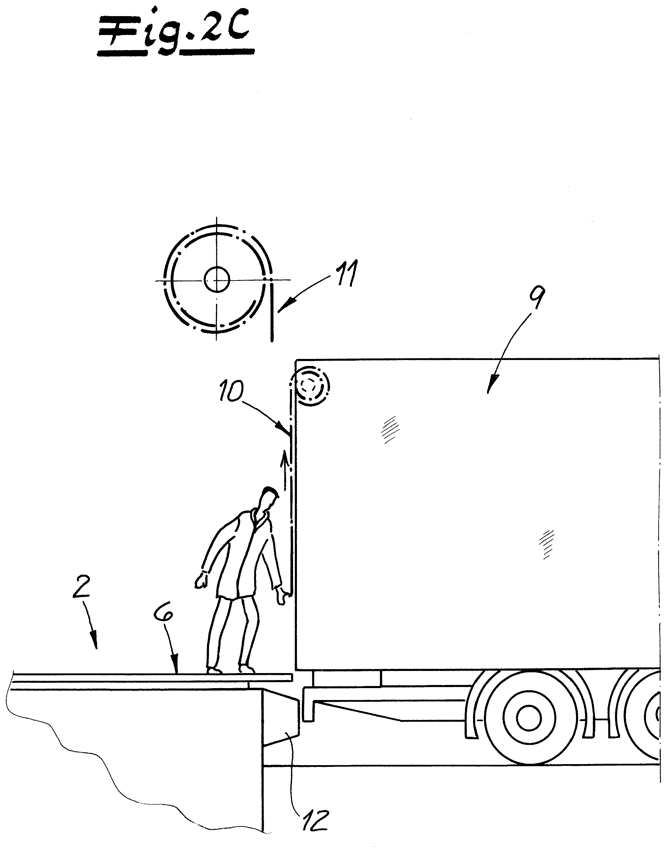

Entsprechend zeigt die Fig. 2C die Trittfläche 6 soweit ausgefahren, dass das Rolltor 10 an dem Laderaum 9 sicher von Hand geöffnet werden kann. Dabei ist auch zunächst unerheblich, dass sich der vordere Rand der Trittfläche 6 noch unterhalb eines Bodens des Laderaums 9 befindet.

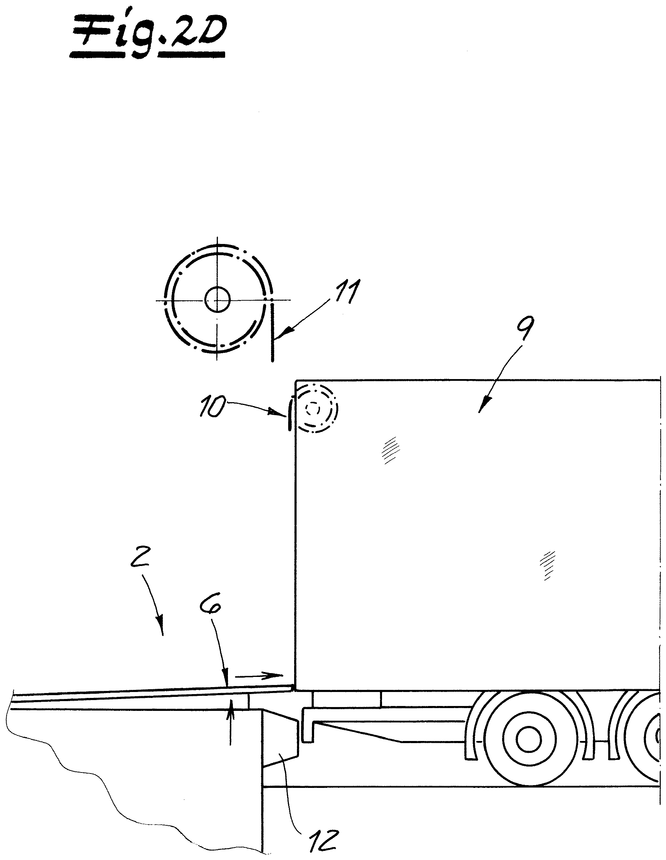

Nach dem Öffnen des Laderaums 9 kann dann gemäß der Fig. 2D die Trittfläche 6 der Vorschub-Ladebrücke 2 in bekannter Weise mit Hilfe der Eingabeschnittstelle 4 so positioniert werden, dass der vordere Rand der Trittfläche 6 auf bzw. über den Boden des Laderaums 9 gelegt wird.

## Patentansprüche

1. Vorschub-Ladebrücke (2), welche eine an einem vorderen Rand höhenverstellbare und ausfahrbare Trittfläche (6) aufweist,
wobei Antriebe für die Höhenverstellung und das Ausfahren der Trittfläche (6) an eine Steuerung angeschlossen sind,
wobei die Steuerung eine Eingabeschnittstelle (4) aufweist, mit der die Trittfläche (6) von einem Benutzer durch eine Höhenverstellung sowie ein Ausfahren positionierbar ist,
**dadurch gekennzeichnet, dass** die Steuerung eine Zusatz-schnittstelle (7) aufweist, deren Betätigung ein Ausfahren der Trittfläche (6) bewirkt und dass ausgehend von einer Ruhestellung der Vorschub-Ladebrücke (2) die Eingabeschnittstelle (4) bis zu einer erstmaligen Betätigung der Zusatzschnittstelle (7) von der Steuerung deaktiviert ist.

2. Vorschub-Ladebrücke nach Anspruch 1, **dadurch gekennzeichnet, dass** als Zusatzschnittstelle (7) ein einziger Schalter vorgesehen ist.

3. Vorschub-Ladebrücke nach Anspruch 1 oder 2, **dadurch gekennzeichnet, dass** die Steuerung dazu eingerichtet ist, nach der Betätigung der Zusatzschnittstelle (7) ein akustisches oder optisches Bestätigungssignal zu erzeugen.

4. Vorschub-Ladebrücke nach einem der Ansprüche 1 bis 3, **dadurch gekennzeichnet, dass** die Eingabeschnittstelle (4) zumindest drei Schalter aufweist.

5. Vorschub-Ladebrücke nach einem der Ansprüche 1 bis 4, **dadurch gekennzeichnet, dass** die Trittfläche (6) an einer dem vorderen Rand gegenüberliegenden Seite um eine Drehachse schwenkbeweglich an einer Tragkonstruktion angeordnet ist.

6. Vorschub-Ladebrücke nach einem der Ansprüche 1 bis 5, **dadurch gekennzeichnet, dass** die Trittfläche (6) einen ersten Trittflächenabschnitt und einen zweiten Trittflächenabschnitt aufweist, welche in einer Ausfahrrichtung gegeneinander beweglich sind.

7. Vorschub-Ladebrücke nach einem der Ansprüche 1 bis 6, **dadurch gekennzeichnet, dass** die Eingabeschnittstelle (4) und die Zusatz-schnittstelle (7) als Schalter gemeinsam an einem Bedienfeld (1) angeordnet sind und dass das Bedienfeld (1) zumindest eine optische Anzeigeeinrichtung aufweist, welche der Eingabeschnittstelle (4) oder der Zusatzschnittstelle (7) zugeordnet ist.

8. Verfahren zum Anschluss des Laderaums (9) eines Transportfahrzeuges an einer Vorschub-Ladebrücke (2) nach einem der Ansprüche 1 bis 7,
wobei der geschlossene Laderaum (9) des Fahrzeuges vor der sich in einer Ruhestellung befindenden Vorschub-Ladebrücke (2) derart positioniert wird, dass zwischen dem vorderen Rand der Trittfläche (6) und dem geschlossenen Laderaum (9) ein Abstand verbleibt,
wobei in der Ruhestellung die Eingabeschnittstelle (4) deaktiviert ist und lediglich die Zusatzschnittstelle (7) auf eine Eingabe reagiert,
wobei die Zusatzschnittstelle (7) betätigt wird, wodurch die Trittfläche (6) in Richtung des geschlossenen Laderaums (9) ausgefahren und damit der Abstand zwischen dem vorderen Rand der Trittfläche (6) und dem Laderaum (9) verringert wird und wodurch die Eingabeschnittstelle (4) aktiviert wird,
wobei der Laderaum (9) geöffnet wird und
wobei durch eine Betätigung der Eingabeschnittstelle (4) die Trittfläche (6) an dem geöffneten Laderaum (9) positioniert wird.

## Claims

1. A feed loading bridge (2), which comprises an extendable tread surface (6) height-adjustable at a front edge,
wherein drives of the height adjustment and the extension of the tread surface (6) are connected to a controller,
wherein the controller comprises an input interface (4), with which the tread surface (6) can be positioned by a user through a height adjustment and an extension,
**characterised in that** the controller comprises an additional interface (7), the actuation whereof causes an extension of the tread surface (6), and that, proceeding from a rest position of the feed loading bridge (2), the input interface (4) is deactivated until an initial actuation of the additional interface (7) by the controller.

2. The feed loading bridge according to claim 1, **characterised in that** a single switch is provided as an additional interface (7).

3. The feed loading bridge according to claim 1 or 2, **characterised in that** the controller is set up to generate an acoustic or optical actuation signal after the actuation of the additional interface (7).

4. The feed loading bridge according to any one of claims 1 to 3, **characterised in that** the input interface (4) comprises at least three switches.

5. The feed loading bridge according to any one of claims 1 to 4, **characterised in that** the tread surface (6) is arranged on the support structure so as to be swivellable about a rotational axis at a side lying opposite the front edge.

6. The feed loading bridge according to any one of claims 1 to 5, **characterised in that** the tread surface (6) comprises a first tread surface section and a second tread surface section, which are movable with respect to one another in an extension direction.

7. The feed loading bridge according to any one of claims 1 to 6, **characterised in that** the input interface (4) and the additional interface (7) are arranged together as switches on an operator panel (1) and that the operator panel (1) comprises at least one optical display device, which is assigned to the input interface (4) or the additional interface (7).

8. A method for connecting the loading space (9) of a transport vehicle to a feed loading bridge (2) according to any one of claims 1 to 7,
wherein the closed loading space (9) of the vehicle is positioned in front of the feed loading bridge (2) located in a rest position, in such a way that a distance remains between the front edge of the tread surface (6) and the closed loading space (9),
wherein in the rest position the input interface (4) is deactivated and the additional interface (7) alone reacts to an input,
wherein the additional interface (7) is actuated, as a result of which the tread surface (6) is extended in the direction of the closed loading space (9) and the distance between the front edge of the tread surface (6) and the loading space (9) is thus reduced and, as a result, the input interface (4) is activated, wherein the loading space (9) is opened and
wherein the tread surface (6) is positioned at the opened loading space (9) by an actuation of the input interface (4).

## Revendications

1. Niveleur de quai à lèvre télescopique (2), lequel présente une surface de marche (6) réglable en hauteur et déployable au niveau d'un bord antérieur,
dans lequel des mécanismes d'entraînement pour le réglage en hauteur et le déploiement de la surface de marche (6) sont raccordés à une commande,
dans lequel la commande présente une interface d'entrée (4) avec laquelle la surface de marche (6) peut être positionnée par un utilisateur grâce à un réglage en hauteur ainsi qu'un déploiement,
**caractérisé en ce que** la commande présente une interface supplémentaire (7) dont l'actionnement provoque un déploiement de la surface de marche (6) et qu'en partant d'une position de repos du niveleur de quai à lèvre télescopique (2), l'interface d'entrée (4) est désactivée par la commande jusqu'à un premier actionnement de l'interface supplémentaire (7).

2. Niveleur de quai à lèvre télescopique selon la revendication 1, **caractérisé en ce qu'**un seul commutateur est prévu en tant qu'interface supplémentaire (7).

3. Niveleur de quai à lèvre télescopique selon la revendication 1 ou 2, **caractérisé en ce que** la commande est étudiée, après l'actionnement de l'interface supplémentaire (7), pour générer un signal de confirmation acoustique ou optique.

4. Niveleur de quai à lèvre télescopique selon l'une des revendications 1 à 3, **caractérisé en ce que** l'interface d'entrée (4) présente au moins trois commutateurs.

5. Niveleur de quai à lèvre télescopique selon l'une des revendications 1 à 4, **caractérisé en ce que** la surface de marche (6) est disposée sur un côté situé en vis-à-vis du bord antérieur de manière pivotante autour d'un axe de rotation sur une structure porteuse.

6. Niveleur de quai à lèvre télescopique selon l'une des revendications 1 à 5, **caractérisé en ce que** la surface de marche (6) présente une première partie de surface de marche et une deuxième partie de surface de marche, lesquelles sont mobiles l'une par rapport à l'autre en direction de déploiement.

7. Niveleur de quai à lèvre télescopique selon l'une des revendications 1 à 6, **caractérisé en ce que** l'interface d'entrée (4) et l'interface supplémentaire (7) en tant que commutateur sont disposées ensemble sur un panneau de commande (1) et que le panneau de commande (1) présente au moins un dispositif d'affichage optique qui est associé à l'interface d'entrée (4) ou à l'interface supplémentaire (7).

8. Procédé pour le raccordement de l'espace de chargement (9) d'un véhicule de transport à un niveleur de quai à lèvre télescopique (2) selon l'une des revendications 1 à 7,
dans lequel l'espace de chargement (9) fermé du véhicule est positionné devant le niveleur de quai à lèvre télescopique (2) se trouvant dans une position de repos de telle sorte qu'un espace subsiste entre le bord antérieur de la surface de marche (6) et l'espace de chargement (9) fermé,
dans lequel, dans la position de repos, l'interface d'entrée (4) est désactivée et seule l'interface supplémentaire (7) réagit à une entrée,
dans lequel l'interface supplémentaire (7) est actionnée, moyennant quoi la surface de marche (6) est déployée en direction de l'espace de chargement (9) fermé et qu'ainsi l'espace entre le bord antérieur de la surface de marche (6) et l'espace de chargement (9) est réduit et moyennant quoi l'interface d'entrée (4) est activée,
dans lequel l'espace de chargement (9) est ouvert et dans lequel, par un actionnement de l'interface d'entrée (4), la surface de marche (6) est positionnée au niveau de l'espace de chargement (9) ouvert.
